(19) Europäisches Patentamt / European Patent Office / Office européen des brevets

(11) **EP 2 330 760 A1**

(12) **EUROPEAN PATENT APPLICATION**

(43) Date of publication:
**08.06.2011 Bulletin 2011/23**

(51) Int Cl.:
***H04B 10/17*** *(2006.01)*

(21) Application number: **09177865.4**

(22) Date of filing: **03.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicants:
- **University College Cork-National University of Ireland, Cork**
  **Cork (IE)**
- **Chalmers University of Technology**
  **412 96 Göteborg (SE)**
- **National & Kapodistrian University of Athens**
  **10676 Athens (GR)**

- **University of Southhampton**
  **Highfield, Southampton SO17 1BJ (GB)**

(72) Inventor: **The designation of the inventor has not yet been filed**

(74) Representative: **Lucey, Michael**
**PURDYLUCEY**
**Intellectual Property**
**Suite 138-139**
**The Chapel Building**
**Mary's Abbey**
**Dublin 7 (IE)**

(54) **Optical amplifier system and method**

(57) The invention provides a system for use in an optical communication network to reduce noise comprising means for tapping a low noise signal from said network and a phase sensitive amplifier (PSA) for conditioning said tapped signal. A laser source provides phase locked reference signals to generate at least one pump signal, wherein the at least one pump signal provides correct phase alignment for optimum PSA operation. The invention makes use of injection locked and/or phase locked laser sources in conjunction with low power input tap couplers, or post/mid amplification taps to provide the required phase locked reference signals without degrading the input loss or noise. The use of injection/phase locked local lasers suppresses the detrimental impact of the low tapped power or added noise in the generation of the required pump signals.

Figure 1

EP 2 330 760 A1

**Description**

**Field of the Invention**

The invention relates to optical amplifiers. In particular the invention relates to a Low Noise Black Box Phase Sensitive Amplifier system and method for use in an optical communication network.

**Background to the Invention**

Optical parametric amplifiers are anticipated to offer significant benefit to communication networks, by reducing the noise figure to 0, or even -3dB in certain configurations. It is highly desirable in communication networks to keep noise levels to a minimum. Whilst sporadic progress has been made worldwide in achieving noise figures of this level referred to the input of the nonlinear medium used for parametric amplification, no practical systems have been developed owing to the large losses, or noise processes required at the input of the amplifier in order to obtain the type of phase sensitive parametric amplification required to generate these noise figure advantages.

Phase sensitive parametric amplifiers fall into three classes, with two defining parameters, these are one/two pump and degenerate/non-degenerate amplifiers. Considering the non-degenerate case first, for optimum low noise performance, an idler signal of equal amplitude and phase to the measured signal is required at the input to the nonlinear medium. To achieve this, the signal may be replicated, for example by passing through a sine wave driven modulator. However, even imagining the possibility of zero insertion loss devices, the requirement for equal powers for the signal and idler fundamentally require 3dB of the incoming signal power to be used to generate the idler, effectively resulting in 3dB loss. This adds directly to the usable noise figure of the device.

Alternatively, non-linear processes may be used to generate the idler, such as four wave mixing. However, in this case the generated idler power is typically lower than the signal, and the required loss to equalise the power levels again degrades the input signal power and hence the noise figure. At higher conversion efficiencies the same device begins to operate as a phase insensitive amplifier, and so although equal powers for signal and idler may be obtained, spontaneous processes within the amplifier introduce noise into the system, giving rise to a minimum overall noise figure for the aggregate device (including idler generation and phase sensitive amplifier blocks) of 3dB. Conventional technology is therefore unable to deliver the theoretical minimum noise figures in a signal in/signal out "black box" format.

Phase sensitive amplifiers (PSA) offer the prospect of 0dB noise figures, or even -3dB noise figures for certain confirmation (regenerative capabilities) with the associated performance benefits which include up to 6dB increase in reach, span power budget reduction, up to 3dB increase in bit rate or up to 10dB reduction in required transmitted power (if more than one, 6dB benefit is shared, not cumulative). However, all known demonstrations have included significant effective losses at the input of the PSA or the introduction of excess noise. This loss/noise adds linearly to the noise figure of the PSA, thereby eliminating the benefit of using PSAs.

For a degenerate amplifier, comprising two pumps with the signal located centrally between them, rather than generate a phase locked idler signal, a black box system is required to generate two pump signals with precise phase relationships between the pumps and the incoming signals. To date these signals have been generated using non-linear mixing processes through which the signal passes, with the same losses/noise trade of described above. Recent systems with parametric amplifiers, for example a Croussore PTL-21-2-pp70 and PTL-19-11-p864, all suffer from a number of problems, such as large excess losses at the input to the black box of the amplifier.

The use of optical amplifiers, such as erbium doped fibre amplifiers at the input to such a system, increases the noise figure to that of the erbium doped fibre amplifiers. An alternative is to tap the input signal in order to generate idler and pump waves with appropriate phase relationships. However a problem with this approach is if the loss for the signal path is low, the loss for the tapped path will be high, thus the noise figure will either limited by the tap loss, or by the noise figure of a phase insensitive amplifier used to boost the signal powers.

There is therefore a need to provide a low noise Phase Sensitive Amplifier (PSA) system and method for use in an optical communication network to overcome the above mentioned problems.

**Summary of the Invention**

According to the invention there is provided, as set out in the appended claims, a system for use in an optical communication network to reduce noise comprising:

means for tapping a low noise signal from said network;
a phase sensitive amplifier (PSA) for conditioning said tapped signal; and
a laser source for providing phase locked reference signals to generate at least one pump signal, wherein the at least one pump signal provides correct phase alignment for optimum PSA operation.

The invention makes use of injection locked and/or phase locked laser sources in conjunction with low power input tap couplers, or post/mid amplification taps to provide the required phase locked reference signals without degrading the input loss or noise. The use of injection/phase locked local lasers suppresses the detrimental impact of the low tapped power or added noise in the generation of the required pump signals.

Signals are tapped with low power, or after amplification from which phase locked reference signals are obtained. The low power / added noise / power imbalance of this approach normally degrades the quality of the reference signals, however the use of injection/phase locked lasers restores the pump quality and automatically provides the correct phase alignment for optimum PSA performance.

With respect to alternative phase insensitive amplifiers, this approach offers reduced noise figures of between 2 and 5.5dB reduction in practice, and up to 6dB in some configurations. With respect to previously proposed PSA implementations, the present invention enables the fabrication of genuine black box PSAs with such low noise figures, as opposed to PSAs where the beneficial performance is significantly compromised by input loss or noise.

In one embodiment the laser source comprises an injection locked laser.

In another embodiment the laser source comprises a phase locked laser.

In one embodiment said means for tapping comprises a tap coupler or a WDM coupler.

In one embodiment the laser source generates at least one idler signal.

In one embodiment the laser source is integrated with a phase shifter and a coupler, to allow selection of arbitrary phase to track the phase of the tapped signal.

In one embodiment the laser source comprises means for generating two pump degenerate PSA signals, where both pump signals are phase locked to frequency shifted copies of the tapped signal. Said means comprises a pump generation circuit to provide optical amplification.

In one embodiment the tapped signal is passed through a comb generator to provide a copy of said tapped signal, wherein copies of the signal with the required frequency shift provide pump and idler signals for selection by said laser source.

In one embodiment there is provided a further signal processing stage wherein four wave mixing provides a pump signal and a Continuous Wave (CW) signal.

In one embodiment the means for tapping comprises a tap coupler positioned at the input of the PSA.

In one embodiment the means for tapping comprises a tap coupler positioned at the output of the PSA.

In one embodiment the laser source comprises a high power injection locked laser which directly generates sufficient pump signals with appropriate phases.

In one embodiment the phase sensitive amplifier employs injection locked lasers which are directly injected from the tapped signal without the need for additional optical amplification.

In one embodiment the laser source comprises of a quantum dot laser with means to provide mutual injection locking with large path length delays.

In one embodiment said pump signals provide for BPSK signal amplification.

In one embodiment there is provided means for permitting BPSK to ASK data conversion in a single pump implementation.

In one embodiment there is provided phase control elements to compensate for any path drift within the coupler means required to deliver the injection signal to the laser source.

According to another aspect of the invention there is provided method for use in an optical communication network to reduce noise, said method comprising the steps of:

tapping a low noise signal from said network;
conditioning said tapped signal using a phase sensitive amplifier (PSA); and providing phase locked reference signals using a laser source to generate at least one pump signal, wherein the at least one pump signal provides correct phase alignment for optimum PSA operation.

There is also provided a computer program comprising program instructions for causing a computer program to carry out the above method which may be embodied on a record medium, carrier signal or read-only memory.

## Brief Description of the Drawings

The invention will be more clearly understood from the following description of an embodiment thereof, given by way of example only, with reference to the accompanying drawings, in which:-

Figure 1 illustrates a block diagram view of the system according to the invention;
Figure 2 illustrates a specific embodiment of the type of PSA signal conditioning stage;
Figure 3 shows a spectrum generated by the pump signal according to one aspect of the invention;

Figure 4 illustrates a phase space graph showing performance of the data from the system;
Figure 5 illustrates a two pump degenerate PSA signals, where both pumps are phase locked to frequency shifted copies of the data;
Figure 6 shows another embodiment of the system according to another embodiment of the present invention; and
Figure 7 illustrates another embodiment with a tap coupler at the output of the PSA fibre.

## Detailed Description of the Drawings

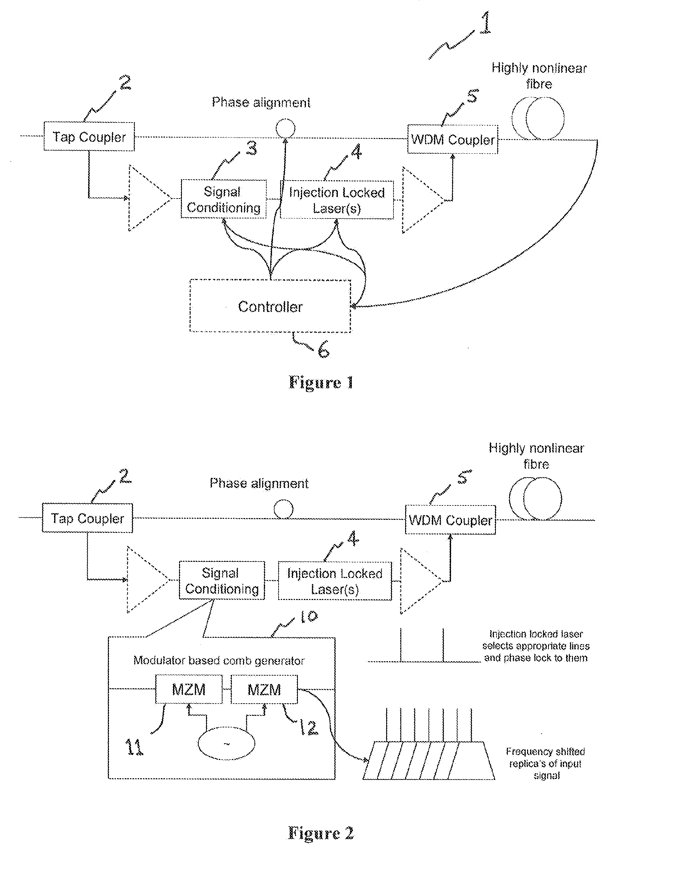

Referring now to the Figures and initially Figure 1 shows a system for use in an optical communication network to reduce noise indicated, generally by the reference numeral 1. A tap coupler 2 provides means for tapping a low noise signal from said network. The tapped signal is fed into a signal conditioning stage 3, such as a phase sensitive amplifier (PSA) for conditioning the tapped signal. A laser source 4 provides phase locked reference signals to generate at least one pump signal, wherein the at least one pump signal provides correct phase alignment for optimum PSA operation. The use of a tapped signal, with low loss for the signal path, followed by an injection locked laser restore the signal purity of the generated idlers and pump signals. The elements shown with dotted lines are optional elements to improve the performance of the system.

In operation a substantial fraction of any noise incurred through the loss of the tapped signal and its subsequent amplification (if necessary) will be regenerated by the injection locking process provided by the laser, providing clean pump and idler signals. These signals can then be combined via appropriate low loss wavelength selective couplers with the original signal to perform low noise phase sensitive amplification. The noise figure of the amplifier, from a black box perspective, would only be degraded by the signal path loss of the tap coupler and WDM combiner plus any degradation associated with residual phase noise of the injection locked lasers. It will be appreciated that the input signals are WDM signals and optionally use a wavelength selective element at the input.

Injection locked lasers not only filter the incoming signal to produce a Continuous Wave (CW) output with the same frequency and phase, but may also provide output with substantially higher output power. Therefore the invention can be employed as a low noise black box phase sensitive amplifier employing high power injection locked lasers which directly generate sufficient pump powers with appropriate phases without the need for additional amplification. Alternatively the invention can be provided as a low noise black box phase sensitive amplifier employing injection locked lasers which are directly injected from a signal tapped from the incoming signal path without the need for additional optical amplification. In both of these cases the injection locked lasers, integrated with phase shifters and couplers, allow selection of arbitrary phase which tracks the phase of the incoming signal.

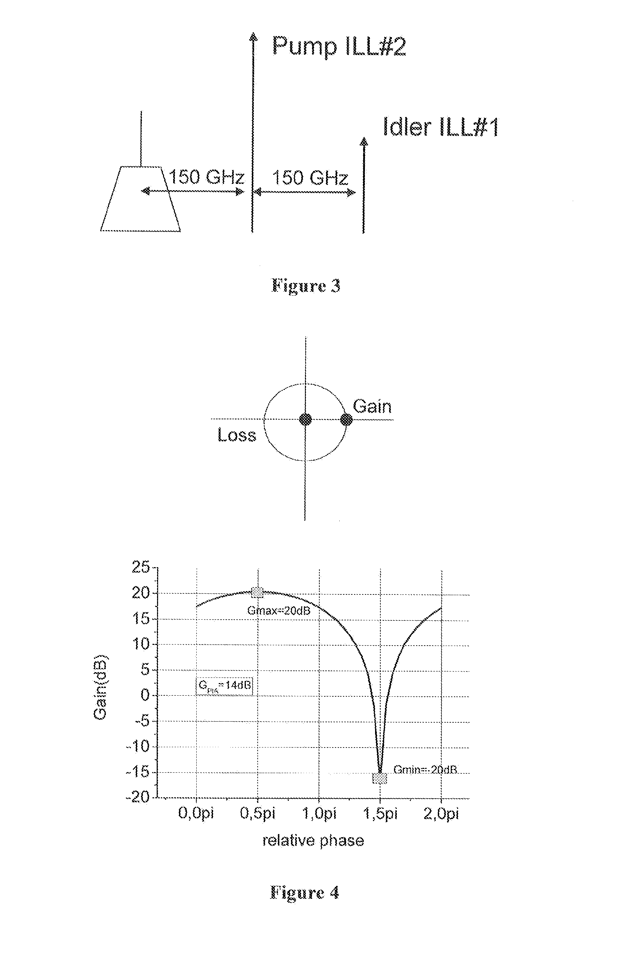

Figure 2 illustrates a specific embodiment of the type of PSA signal conditioning stage that can be employed. In this embodiment, the tapped signal is passed through a comb generator 10. The comb generator 10 comprises references MZM+PM 11 and MZM+MZM 12 which replicates the signal. Copies of the signal with the required frequency shift to become pumps and idler signals are selected by the injection locked lasers which also stabilise the output amplitude, and reduce the noise associated with tap coupler and EDFA, if required. The comb generator 10 can be used for a single pump non-degenerate PSA. Figure 3 shows a spectrum generated by the pump signal, for example for 150 GHz frequency shift is arbitrary. 400 GHz may be more applicable when implementing filtering / WDM coupler schemes in some applications.

It will be appreciated that injection locked lasers provide the high power pump, and a Continuous Wave (CW) idler, with phases locked to the incoming signal. In this case, the PSA has a phase dependent gain given by:

$$P_{S,OUT} = \left[ (2G_{PIA} - 1) + 2\sqrt{G_{PIA}}\sqrt{G_{PIA} - 1}\cos\left(\varphi_S - \varphi_I - \varphi_{fiber,pumps}\right) \right] P_{S,IN},$$

shown schematically in the phase space graph illustrated in Figure 4. $\varphi_{fiber,pumps}$ is determined by the linear and nonlinear phase shift of the fiber, depending on the disper esion properties, the nonlinear properties and the pump power. It will be appreciated that $\varphi_S$ is variable from 0 to $\pi$ and $\varphi_i$ and $\varphi_{fiber,pumps}$ are constant.

Ideally the non-linear process for this configuration (for a noise free idler), would have a -3dB noise figure (the OSNR is improved on passing through the fibre) for an ASK formatted signal. This configuration would therefore result in an improvement in the pre-amplified receiver sensitivity of up to 6dB for NRZ data. Additionally, for a BPSK formatted signal, one phase quadrature can be amplified, whilst the other is attenuated, performing BPSK to ASK format, allowing for low cost direct detection of the received signal, again with an ultra low noise figure.

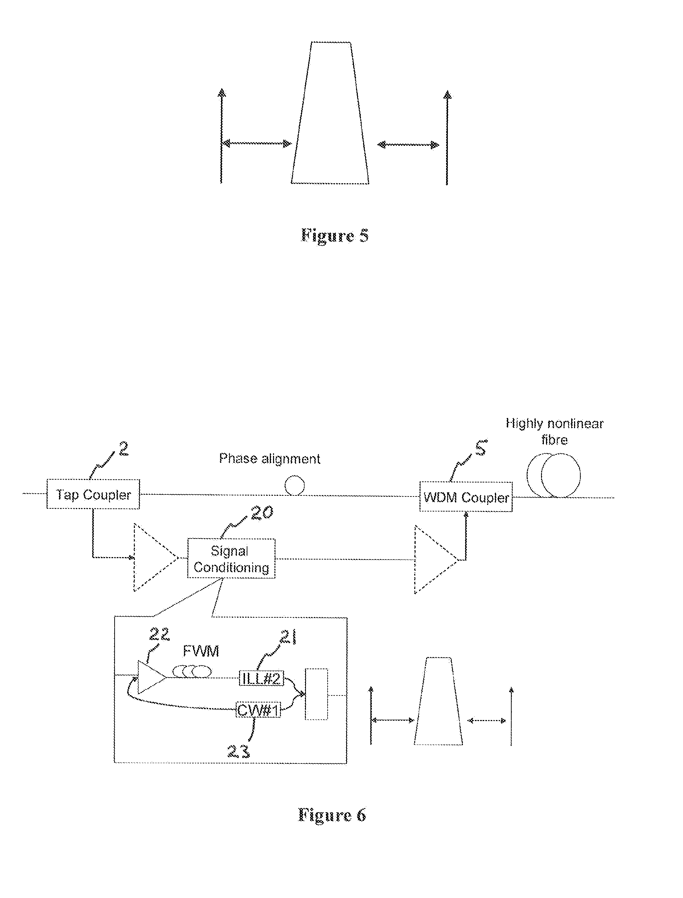

This signal processing configuration may also be used for a two pump degenerate PSA, where both pumps are phase locked to frequency shifted copies of the data, as illustrated in Figure 5. For this configuration, shown in Figure 5, the noise figure limit is 0dB, and gain is observed for both signal levels in BPSK formatted data, acting as an ideal in line amplifier for BPSK data (or ASK data).

Figure 6 shows another embodiment of the present invention. For phase modulated data, a further signal processing stage 20 is required in order to allow injection locking 21without phase ambiguity. One technique is the use of four wave mixing, where the phase modulated signal is used as the pump 22 and one Continuous Wave CW signal 23 is used as a probe, as illustrated in Figure 6. Through FWM a third signal can be generated whose phase $\varphi_3$ is given by $\varphi_3 = 2\varphi_2 - \varphi_1$, where $\varphi_2$ is the phase of the PSK signal and $\varphi_1$ is the phase of the cw probe. For BPSK data, the possible values of $\varphi_2$ are $0 + \varphi_0$ and $\pi + \varphi_0$ where po is the reference phase to which we wish to injection lock. Phase doubling implies that output $\varphi_3$ may take values $0+2\varphi_0 - \varphi_1$ and $2\pi +2\varphi_0 - \varphi_1 == 2\varphi_0 - \varphi_1$, so the modulation is removed and the third signal is correctly phase locked to the other two signals. The signal conditioning block is then as shown in Figure 6.

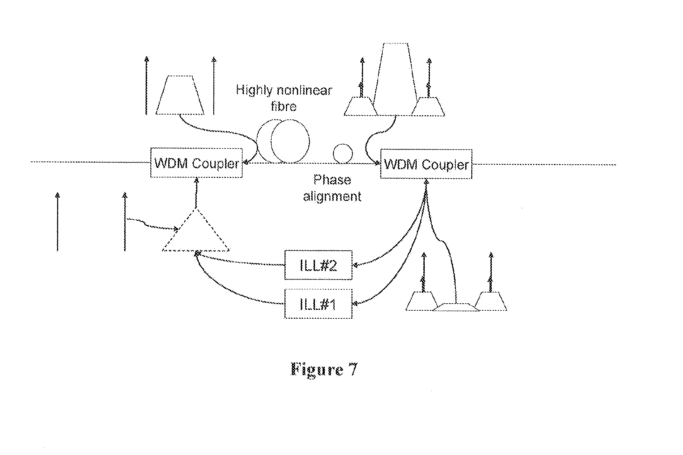

It is envisaged that further improvement in the noise figure may be achieved if the tap coupler is removed from the input of the PSA, and replaced with a tap coupler at the output of the PSA fibre, as shown in Figure 7. In this case, the amplified signal will also interact with each of the pumps, as described in the previous paragraph, adding modulation stripped signal components to the input pump signals. The output thus contains the original pump information, mixed with the information relating to the phase of the remaining signals. Provided the round trip phase delay of the entire circuit is appropriate, these signals may then be used to injection lock the lasers. Clearly, for conventional laser, this mutual locking process may be subject to chaotic behaviour, however, it has recently been observed that the use of quantum dot lasers will enable such mutual injection locking with large path length delays. This then provides for the two pump degenerate PSA, minimises the input loss and therefore the black box noise figure of the PSA.

Optional separate (slow) phase control elements can be used to make up for any path drift within the couplers required to deliver the injection signal to the ILLs and to combine their outputs. These optional elements are shown by the dotted elements in the Figures.

It will be appreciated that the degenerate two pump scheme provides for proper and effective BPSK amplification. In addition the use of a CW idler permitting BPSK to ASK conversion in a single pump implementation provides advantages over prior art systems.

The actual level of benefit obtained by minimising the signal path loss, and regenerating to idler / pump signals with injection locked lasers clearly depends on the level to which the ILL actually regenerate the noise, and the noise transfer mechanisms back from the ILL's to the signal via the parametric amplification process.

PSA's are polarisation sensitive. For a single PSA application, the noise figure is therefore degraded by the need for polarisation tracking at the PSA input (about 1dB), however, polarisation tracking on previous amplifier or transmitter outputs (in order to maintain the input polarisation to the next amplifier) should enable correct operation without degradation of noise figure. Filters can be deployed at the output of the black box such that only the amplified signal is present, and all locally generated pumps and idlers are removed.

It will be appreciated that the invention comprises many different applications for example instrumentation and sensing systems. Such systems may comprise a phase sensitive amplifier (PSA) for conditioning a tapped signal; and a laser source for providing phase locked reference signals to generate at least one pump signal, wherein the at least one pump signal provides correct phase alignment for optimum PSA operation.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The invention is not limited to the embodiments hereinbefore described but may be varied in both construction and detail.

**Claims**

1. A system for use in an optical communication network to reduce noise comprising:

means for tapping a low noise signal from said network;
a phase sensitive amplifier (PSA) for conditioning said tapped signal, **characterised by**:

a laser source for providing phase locked reference signals to generate at least one pump signal, wherein the at least one pump signal provides correct phase alignment for optimum PSA operation.

2. The system as claimed in claim 1 wherein the laser source comprises an injection locked laser.

3. The system as claimed in claim 1 or 2 wherein the laser source comprises a phase locked laser.

4. The system as claimed in any preceding claim wherein said means for tapping comprises a tap coupler or a WDM coupler.

5. The system as claimed in any preceding claim wherein said laser source generates at least one idler signal.

6. The system as claimed in any preceding claim wherein the laser source is integrated with a phase shifter and a coupler, to allow selection of arbitrary phase to track the phase of the tapped signal.

7. The system of any preceding claim wherein said laser source comprises means for generating two pump degenerate PSA signals, where both pump signals are phase locked to frequency shifted copies of the tapped signal.

8. The system of claim 7 wherein said means comprises a pump generation circuit to provide optical amplification.

9. The system of any preceding claim wherein the tapped signal is passed through a comb generator to provide a copy of said tapped signal, wherein copies of the signal with the required frequency shift provide pump and idler signals for selection by said laser source.

10. The system as claimed in any preceding claim comprising a further signal processing stage wherein four wave mixing provides a pump signal and a Continuous Wave (CW) signal.

11. The system as claimed in any preceding claim wherein the means for tapping comprises a tap coupler positioned at the input of the PSA.

12. The system as claimed in any preceding claim wherein the means for tapping comprises a tap coupler positioned at the output of the PSA.

13. The system as claimed in any preceding claim wherein the laser source comprises a high power injection locked laser which directly generates sufficient pump signals with appropriate phases.

14. The system as claimed in any preceding claim wherein the phase sensitive amplifier employs injection locked lasers which are directly injected from the tapped signal without the need for additional optical amplification.

15. The system as claimed in any preceding claim wherein the laser source comprises of a quantum dot laser with means to provide mutual injection locking with large path length delays.

Figure 1

Figure 2

Figure 3

Figure 4

Figure 5

Figure 6

Figure 7

Europäisches
Patentamt

European
Patent Office

Office européen
des brevets

**EUROPEAN SEARCH REPORT**

Application Number

EP 09 17 7865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAKADA A ET AL: "Optical phase-sensitive amplifier with pump laser phase-locked to input signal light" IOOC - ECOC '97. 11TH INTERNATIONAL CONFERENCE ON INTEGRATED OPTICS AND OPTICAL FIBRE COMMUNICATIONS / 23RD EUROPEAN CONFERENCE ON OPTICAL COMMUNICATIONS. EDINBURGH, SEPT. 22 - 25, 1997; [IEE CONFERENCE PUBLICATION], LONDON : IEE, UK, vol. 2, 22 September 1997 (1997-09-22), pages 98-101, XP006508668 ISBN: 978-0-85296-697-6 | 1-9, 11-15 | INV. H04B10/17 |
| A | * the whole document * | 10 | |
| A | IMAJUKU W ET AL: "Optical phase-sensitive amplification using two phase-locked light sources" ELECTRONICS LETTERS, IEE STEVENAGE, GB LNKD- DOI:10.1049/EL:19970910, vol. 33, no. 16, 31 July 1997 (1997-07-31), pages 1403-1404, XP006007767 ISSN: 0013-5194 * the whole document * | 1-15 | |
| X | TAKANO KYOYA ET AL: "Phase-sensitive Amplifier Based on Two-pump Four-wave Mixing in an Optical Fiber" IOOC-ECOC. EUROPEAN CONFERENCE ON OPTICAL COMMUNICATION ECOC.INTERNATIONAL CONFERENCE ON INTEGRATED OPTICS AND OPTICAL FIBRECOMMUNICATION IOOC, XX, XX LNKD- DOI:10.1109/ECOC.2006.4800934, 1 January 2006 (2006-01-01), pages 1-2, XP040381401 | 1-9, 11-15 | |
| A | * the whole document * | 10 | |

TECHNICAL FIELDS
SEARCHED      (IPC)

H04B

-/--

The present search report has been drawn up for all claims

| Place of search | Date of completion of the search | Examiner |
|---|---|---|
| Munich | 12 May 2010 | Petitit, Nicolas |

Europäisches
Patentamt

European
Patent Office

Office européen
des brevets

**EUROPEAN SEARCH REPORT**

Application Number

EP 09 17 7865

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| A | US 2006/285197 A1 (MCKINSTRIE COLIN J [US]) 21 December 2006 (2006-12-21)<br>* figure 5 *<br>* paragraph [0017] *<br>* paragraph [0039] *<br>----- | 1-15 | |

TECHNICAL FIELDS
SEARCHED     (IPC)

The present search report has been drawn up for all claims

| Place of search | Date of completion of the search | Examiner |
|---|---|---|
| Munich | 12 May 2010 | Petitit, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 17 7865

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2010

| Patent document cited in search report | Publication date | Patent family member(s) | Publication date |
|---|---|---|---|
| US 2006285197 A1 | 21-12-2006 | NONE | |

EPO FORM P0459

For more details about this annex : see Official Journal of the European Patent Office, No. 12/82